# FASCICULE DE BREVET EUROPEEN

(11) **EP 1 976 744 B1**
(45) Date de publication et mention de la délivrance du brevet: **30.09.2009**
(21) Numéro de dépôt: 07730845.0
(22) Date de dépôt: 23.01.2007
(51) Int. Cl.: B62D 49/08, B62D 55/00

(54) **DISPOSITIF POUR FACILITER LA GESTION DU LESTAGE D'UN TRACTEUR AGRICOLE ET POUR EN AMELIORER LA PRODUCTIVITE**
VORRICHTUNG ZUR GEWICHTSKONTROLLE EINES LANDWIRTSCHAFTLICHEN TRAKTORS UND ZUR ERHÖHUNG SEINER PRODUKTIVITÄT
DEVICE FACILITATING CONTROL OF THE WEIGHTING OF AN AGRICULTURAL TRACTOR AND FOR IMPROVING ITS PRODUCTIVITY

(30) Priorité: 27.01.2006 FR 0600758
(43) Date de publication de la demande: 08.10.2008
(73) Titulaire: Defrancq, Hubert, 02190 Guignicourt (FR)
(72) Inventeur: Defrancq, Hubert, 02190 Guignicourt (FR)
(74) Mandataire: Michardière, Bernard
(86) Numéro de dépôt international: PCT/FR2007/000126
(87) Numéro de publication internationale: WO 2007/085722

(56) Documents cités:
- WO-A-02/21898
- FR-A- 2 815 319
- FR-A1- 2 864 818

## Description

L'invention est relative à un dispositif pour faciliter la gestion du lestage d'un tracteur agricole et pour en améliorer la productivité.

La capacité d'un tracteur à transmettre un effort au sol est déterminée par le coefficient d'adhérence de ce tracteur au sol. Ce coefficient, qui correspond au rapport de l'effort de traction sur le poids du tracteur, est variable en fonction des conditions du sol et des éléments de liaison du tracteur au sol, pneumatiques ou chenilles.

L'effort de traction possible est égal au coefficient d'adhérence multiplié par le poids supporté par les éléments qui transmettent le couple de traction.

Le poids supporté par les éléments moteurs du tracteur, roues motrices ou chenilles, est donc un facteur sur lequel l'utilisateur peut agir pour améliorer la capacité de traction, pour un coefficient d'adhérence donné. Il est ainsi connu d'assurer un lestage du tracteur par exemple au moyen de masses installées dans les roues, ou par gonflage à l'eau des roues du tracteur.

Cependant, le poids ajouté est générateur de résistance au roulement, de compaction des sols et d'usure prématurée par fatigue accrue des composants mécaniques.

Il est donc souhaitable de pouvoir facilement ajouter ou éliminer le poids en excès , pour s'adapter rapidement aux conditions de travail

A l'avant du tracteur, cette gestion est relativement aisée avec l'aide d'un relevage avant, comme montré par exemple dans les demandes de brevet FR 2 864 818 ou FR 2 814 038.

A l'arrière, au tracteur, est souvent accroché un outil pour l'application qui justifie l'emploi du tracteur. Dans ce cas, l'accrochage direct d'une masse dans le relevage arrière est source d'interférence avec l'outil utilisé, même s'il ne s'agit que d'un outil traîné. De plus, la présence de la masse dans le relevage arrière limite la visibilité sur l'outil arrière.

FR- A - 2 815 319, qui couvre les caractéristiques du préambule de la revendication 1, montre un dispositif pour améliorer le lestage d'un tracteur agricole qui comprend un moyen de support prévu pour s'étendre transversalement à la direction de progression du tracteur. Selon ce document, un moyen de support de masse de lestage est constitué par une traverse qui est fixée à l'avant du tracteur. Un déplacement latéral d'une masse est prévu pour rééquilibrer le lestage transversal, mais le lestage global n'est pas modifié.

L'invention a pour but, surtout, de fournir un dispositif permettant de faciliter la gestion du lestage d'un tracteur d'agricole et d'en améliorer la productivité, en facilitant la pose et la dépose de masses de lestage sans avoir recours à des outillages pour les sécuriser sur le tracteur.

Il est souhaitable en outre que le dispositif proposé autorise l'emploi d'un outil à l'arrière du tracteur, sans limiter la visibilité centrale arrière et en permettant le passage, sans interférence, de flexibles d'alimentation hydraulique des outils.

Lors de son installation à l'avant, de préférence, le dispositif devrait permettre de réduire le déport longitudinal en position frontale des masses et d'éliminer les interférences avec le système d'éclairage.

Plus généralement, le dispositif devrait permettre d'accroître la productivité globale en permettant d'augmenter le nombre de masses de lestage ou d'outils de travail qui peuvent équiper le tracteur.

Selon l'invention, un dispositif pour faciliter la gestion du lestage d'un tracteur agricole et pour en améliorer la productivité qui comprend un moyen de support prévu pour s'étendre transversalement à la direction de progression du tracteur, est **caractérisé en ce que** le moyen de support comporte une partie centrale avec un moyen d'attelage à un relevage trois points, avant ou arrière, ce moyen d'attelage comportant trois éléments de connexion, à savoir un élément supérieur médian et deux éléments inférieurs latéraux et, de part et d'autre de cette partie centrale, une extension latérale équipée d'un moyen d'accrochage d'une masse, d'une charge ou d'un outil.

Avantageusement, le moyen d'accrochage de chaque extension latérale est un moyen d'accrochage à trois points normalisés avec le triangle d'attelage d'un outil agricole ou d'une masse.

Les moyens d'accrochage des extensions latérales peuvent comporter des points d'accrochage inférieurs munis de verrous rabattables propres à assurer le maintien des masses ou des outils attelés à ces points d'accrochage.

Le moyen de support peut comprendre une poutre transversale solidaire de bras verticaux s'étendant vers le bas et espacés suivant la direction longitudinale de la poutre, les moyens d'accrochage des extensions latérales à trois points comprenant deux crochets prévus en partie basse de deux bras et un crochet supérieur solidaire de la poutre.

Avantageusement, l'écartement entre les bras intérieurs correspond à l'écartement normalisé des points d'accrochage inférieurs d'un outil et les points d'accrochage inférieurs au relevage du tracteur sont fixés à l'extrémité inférieure des bras du côté tourné vers le tracteur.

Lorsque le dispositif est destiné à être accroché à un relevage avant d'un tracteur, il peut comporter des moyens d'accrochage tournés vers l'avant et vers l'arrière au niveau des extensions latérales afin de permettre d'accrocher deux masses de chaque côté, l'une en avant et l'autre en arrière du moyen de support.

Le moyen de support peut être formé par un bâti comportant deux extensions latérales déportées vers le tracteur de manière à réduire le déport des masses attelées sur ces extensions latérales.

Le dispositif peut comporter des extensions latérales supportées par des moyens de levage reliés à une partie centrale du moyen de support de manière à soulever les masses afin de permettre le passage, au-dessous de ces masses, d'une flèche d'attelage d'un outil semi-porté.

Les moyens de levage peuvent comprendre au moins un vérin disposé transversalement pour commander la montée ou la descente des extensions latérales reliées à un cadre central par au moins un bras articulé.

Lorsque les moyens de levage comprennent un seul vérin disposé transversalement pour commander la montée ou la descente des extensions latérales, des butées hautes et basses sont prévues pour éviter qu'une masse aille au-delà des extrémités de sa trajectoire.

Les moyens de levage peuvent comprendre deux vérins, un par bras, disposés transversalement.

Chaque extension latérale peut être reliée à la partie centrale par un parallélogramme déformable.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une vue en perspective d'un dispositif selon l'invention pour faciliter la gestion du lestage d'un tracteur agricole.
Fig. 2 est une vue schématique de dessus du dispositif de Fig. 1 attelé à l'arrière d'un tracteur.
Fig. 3 est une vue schématique de dessus d'un tracteur équipé d'un dispositif selon l'invention aussi bien à l'avant qu'à l'arrière.
Fig. 4 montre partiellement, en vue de dessus, une variante d'équipement du tracteur à l'avant.
Fig. 5 montre, semblablement à Fig.4, une autre variante d'équipement du tracteur à l'avant.
Fig. 6 montre, en vue de dessus, une autre variante d'équipement du tracteur à l'avant.
Fig. 7 et 8 montrent, semblablement à Fig. 3, deux autres variantes d'équipement du tracteur.
Fig. 9 est une vue schématique en élévation d'une variante de réalisation du dispositif selon l'invention.
Fig. 10 est une vue de dessus par rapport à Fig. 9, et
Fig. 11 est une vue schématique en élévation d'une autre variante de réalisation du dispositif.

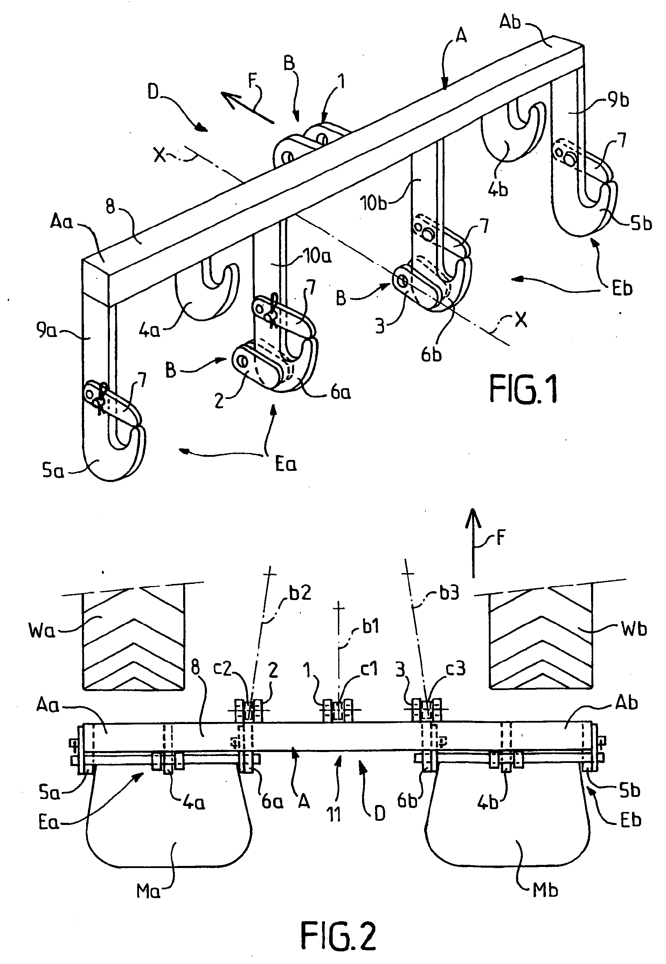

En se reportant à Fig. 1, on peut voir un dispositif D selon l'invention pour faciliter la gestion du lestage d'un tracteur agricole, et en améliorer sa productivité. Le dispositif D comprend un moyen de support A prévu pour s'étendre transversalement, essentiellement orthogonalement, à la direction de progression X-X du tracteur. Ce moyen de support A comporte, dans sa partie centrale, un moyen d'attelage B à un relevage trois points avant ou arrière du tracteur. On rappelle qu'un relevage trois points de tracteur comprend deux points d'attache inférieurs prévus à l'extrémité de bras b2, b3 (Fig.2) commandés par des moyens de levage et un troisième point haut, équidistant des points d'attelage inférieurs, généralement relié par une bielle b1 (Fig.2) au troisième point d'attelage de l'outil.

Le moyen d'attelage B de la partie centrale comprend trois éléments de connexion, à savoir un élément 1 supérieur médian et deux éléments inférieurs latéraux 2, 3. Ces éléments de connexion peuvent être réalisés sous forme de chapes comportant deux oreilles écartées, percées de trous, entre lesquelles viennent se loger des oeilletons c1, c2, c3 (Fig. 2) prévus à l'extrémité des bras du relevage du tracteur. La liaison entre les chapes et les oeilletons est assurée par un axe traversant la chape et l'oeilleton associé.

Le moyen de support A présente, de part et d'autre de sa partie centrale avec moyen d'attelage B, une extension latérale Aa, Ab équipée respectivement de moyens d'accrochage Ea, Eb latéraux permettant un accrochage de masses, de charges ou d'outils, et un décrochage aisé sans que l'utilisateur ait besoin d'un outil pour ces opérations.

Avantageusement, chaque moyen d'accrochage latéral Ea, Eb est du type attelage à trois points 4a, 5a, 6a et 4b, 5b et 6b, normalisés avec le triangle d'attelage d'un outil agricole ou d'une masse. Chaque moyen Ea, Eb permet de fixer une masse de lestage, ou un outil relié normalement au relevage trois points du tracteur. La pose et la dépose de la masse de lestage ou de l'outil accroché aux moyens Ea, Eb s'effectuent rapidement, sans outillage. Comme exposé dans la suite de la description, les charges susceptibles d'être accrochées aux moyens Ea, Eb peuvent être constituées par des cuves remplies de liquide ou par des fourches lève-palettes par exemple.

Les points d'accrochage haut 4a, 4b sont formés par des crochets, équidistants des points d'accrochage inférieurs associés 5a, 6a ou 5b, 6b.

Les moyens d'accrochage Ea, Eb sont tournés du côté du moyen de support A opposé au moyen d'attelage B.

Les dimensions des extensions latérales Aa, Ab sont normalisées au niveau de leur interface avec le triangle d'attelage de l'outil ou de la masse pour faciliter l'interchangeabilité.

Les éléments d'accrochage inférieurs 5a, 6a et 5b, 6b sont équipés de verrous 7 rabattables pour assurer le maintien des masses ou des outils attelés dans les crochets inférieurs 5a, 6a ou 5b, 6b.

Selon l'exemple de réalisation des Fig. 1 et 2, le moyen de support A comprend un bâti 8 formé par une poutre transversale solidaire de bras verticaux 9a, 10a et 9b, 10b s'étendant vers le bas et espacés suivant la direction longitudinale du bâti 8. Les éléments d'accrochage inférieurs 5a, 6a et 5b, 6b sont prévus à l'extrémité inférieure des bras verticaux.

Avantageusement, l'écartement entre les bras intérieurs 10a et 10b correspond à l'écartement normalisé des points d'accrochage inférieurs d'un outil de sorte que les chapes 2 et 3 sont fixées à l'extrémité inférieure des bras 10a, 10b du côté opposé aux éléments d'accrochage 6a, 6b.

Fig. 2 montre, en vue de dessus, le dispositif D attelé à l'arrière d'un tracteur derrière les roues Wa, Wb. Le relevage arrière du tracteur est schématiquement représenté avec la bielle de liaison b1 du troisième point supérieur, et les bras inférieurs b2, b3. Le sens de déplacement du tracteur est représenté schématiquement par la flèche F.

Une masse Ma, Mb est représentée attachée au moyen d'accrochage latéral Ea, Eb. Un outil pourrait être accroché à la place de l'une ou de l'autre des masses.

Il est à noter que la zone centrale 11 entre les moyens d'accrochage Ea, Eb reste libre, ce qui permet à l'utilisateur de conserver une bonne visibilité vers l'arrière, car les masses sont alors placées derrière les pneumatiques droit et gauche, c'est-à-dire dans une zone où la visibilité est déjà limitée.

La zone centrale 11 libre à l'arrière permet l'accrochage d'un outil sur le système de remorquage du tracteur qui peut consister en un crochet ou une barre de traction.

La dimension transversale du bâti 8 est en général inférieure ou égale à l'encombrement transversal maximal du tracteur, dont la largeur hors tout n'est ainsi pas augmentée.

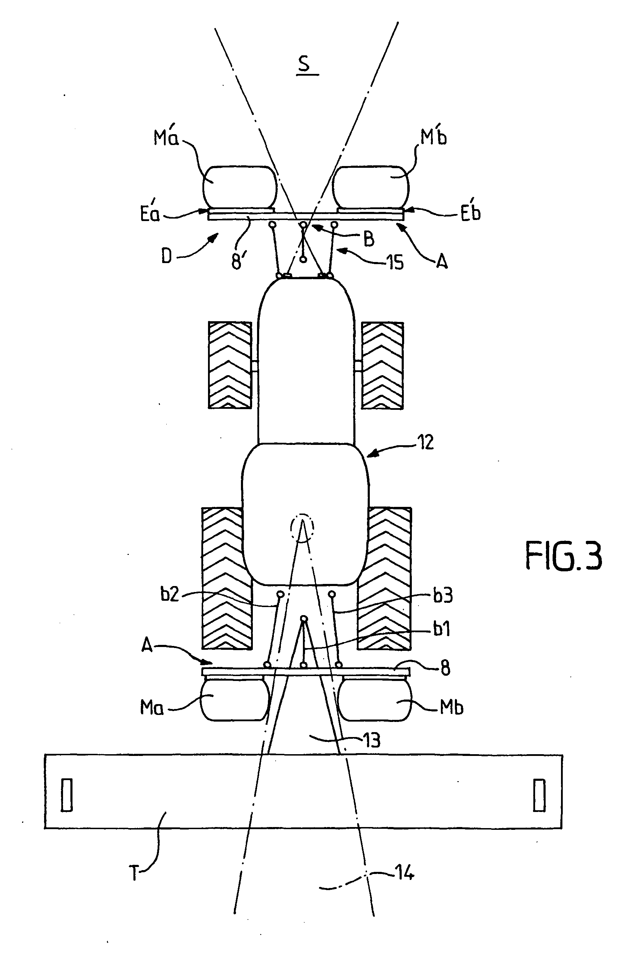

Fig. 3 montre, en vue de dessus, un tracteur 12 comportant à l'arrière un bâti 8 accroché au relevage arrière du tracteur avec deux masses Ma, Mb accrochées aux extensions latérales du bâti 8, vers l'arrière par rapport au tracteur. Un outil tracté T est attelé au crochet arrière du tracteur par un élément rigide de traction 13. Le champ de vision vers l'arrière 14 du conducteur est dégagé dans la partie centrale.

Un autre bâti 8' est attelé au dispositif de relevage avant 15 du tracteur avec son moyen d'attelage central B tourné vers l'arrière, c'est-à-dire vers le tracteur et les moyens d'accrochage latéraux E'a, E'b tournés vers l'avant. Les masses M'a, M'b sont accrochées vers l'avant par rapport au bâti 8' en laissant la partie centrale libre.

Lors du montage d'un bâti 8' sur un dispositif de relevage avant du tracteur, comme illustré sur Fig.3, le déport latéral des masses M'a, M'b, ou des outils ou des cuves, accrochés au bâti 8' permet de ne pas obstruer le faisceau S des phares.

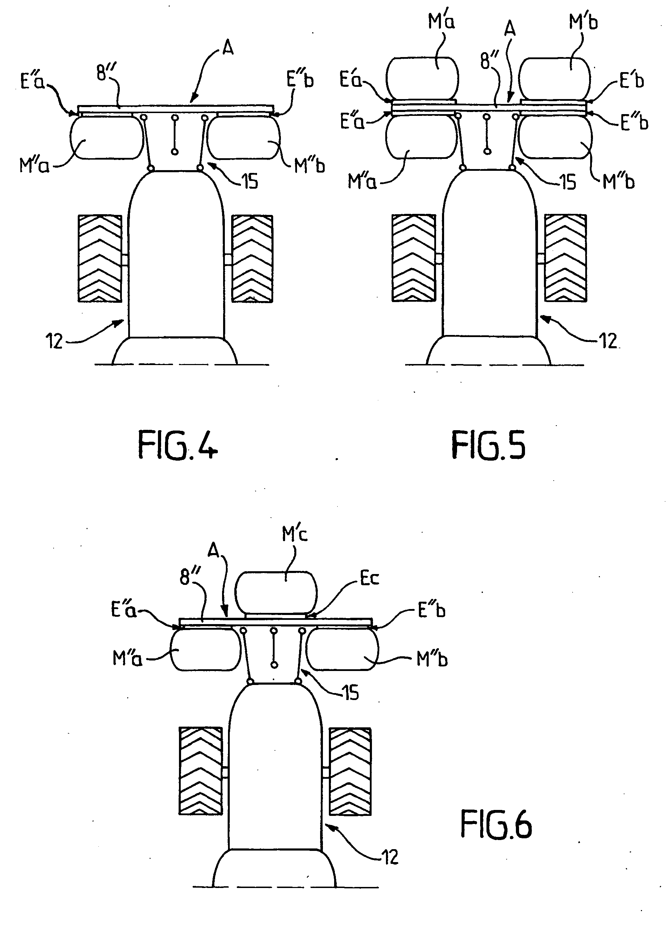

Fig. 4 montre une variante de réalisation selon laquelle le bâti 8" accroché au relevage avant du tracteur comporte des moyens d'accrochage latéraux E"a, E"b tournés vers le tracteur de sorte que les éléments de lestage, notamment les masses M"a, M"b attelées, sont tournés vers le tracteur par rapport au bâti 8". Le déport longitudinal des masses M"a, M"b, relativement au tracteur, se trouve ainsi réduit par rapport à la solution de Fig. 3.

Fig. 5 montre, semblablement à Fig. 4, une autre variante de réalisation selon laquelle le bâti 8" situé à l'avant du tracteur comporte sur ses extensions latérales, un double moyen d'accrochage, c'est-à-dire sur la gauche un moyen d'accrochage E'a tourné vers l'avant et un moyen d'accrochage E"a tourné vers l'arrière et, sur la droite, un moyen d'accrochage E'b tourné vers l'avant et un moyen d'accrochage E"b tourné vers l'arrière, tous ces moyens d'accrochage étant du type à trois points normalisés.

Il devient ainsi possible d'accroître la capacité de lestage avec quatre masses, respectivement M'a, M"a et M'b, M"b. Ces masses peuvent être des masses standard peu coûteuses à produire et simples à gérer. Lorsque ces masses sont constituées par des cuves remplies de liquide, notamment d'eau, chaque cuve est montée sur un berceau muni d'un accrochage à trois points standardisés.

Fig. 6 montre, semblablement à Fig. 4, une autre variante de réalisation selon laquelle le bâti 8" situé à l'avant du tracteur comporte, du côté avant, un moyen d'accrochage central Ec à trois points standardisés en plus des moyens d'accrochage E"a et E"b prévus vers l'arrière sur les extensions latérales. Trois masses ou charges peuvent ainsi être attelées au bâti 8" à savoir deux masses latérales M"a, M"b tournées vers l'arrière et une masse centrale M'c tournée vers l'avant.

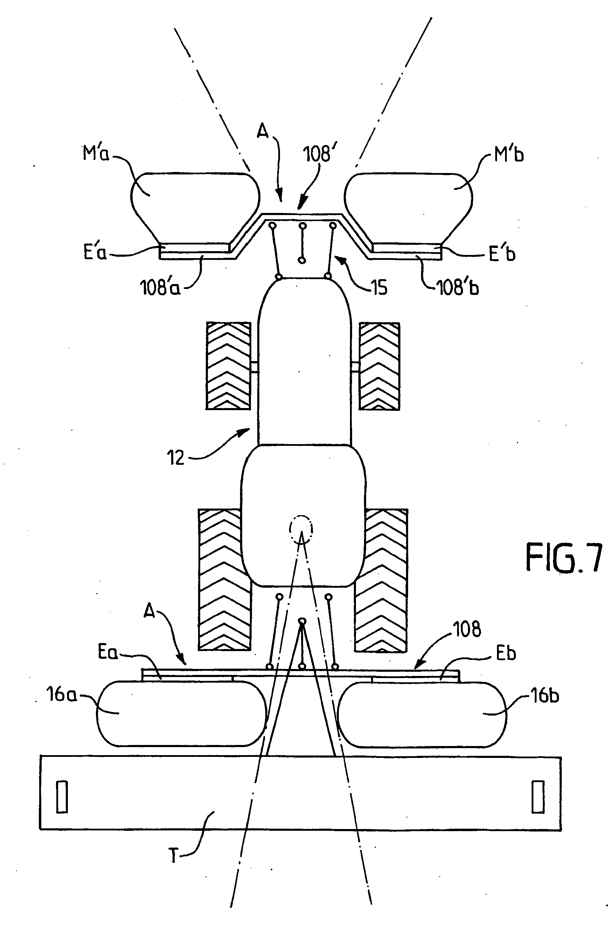

Fig. 7 montre, semblablement à Fig. 3, une variante de réalisation selon laquelle le bâti 108' attelé sur le relevage avant du tracteur comporte deux extensions latérales 108'a, 108'b déportées vers l'arrière, c'est-à-dire vers le tracteur. Le déport longitudinal des masses M'a, M'b attelées à l'avant des extensions 108'a, 108'b sur les moyens d'attache E'a et E'b est ainsi limité. Vu de dessus, le bâti 108' comporte une partie centrale formée par la petite base d'un trapèze isocèle, située vers l'avant, tandis que les extensions latérales 108'a, 108'b situées vers l'arrière sont reliées par les côtés inclinés du trapèze à la petite base.

Il est à noter que selon Fig.7, le bâti 108' a une dimension transversale supérieure à l'encombrement en largeur du tracteur afin de permettre d'attacher des charges plus volumineuses.

De la même manière, le bâti arrière 108 selon Fig. 7 a une dimension transversale supérieure à la largeur du tracteur, ce qui permet une augmentation de l'écartement des extensions latérales et la mise en place de cuves 16a, 16b plus volumineuses, par exemple remplies d'eau. Chaque cuve est fixée sur un berceau (non visible) comportant trois points d'accrochage normalisés pour attelage au moyen d'accrochage latéral Ea, Eb.

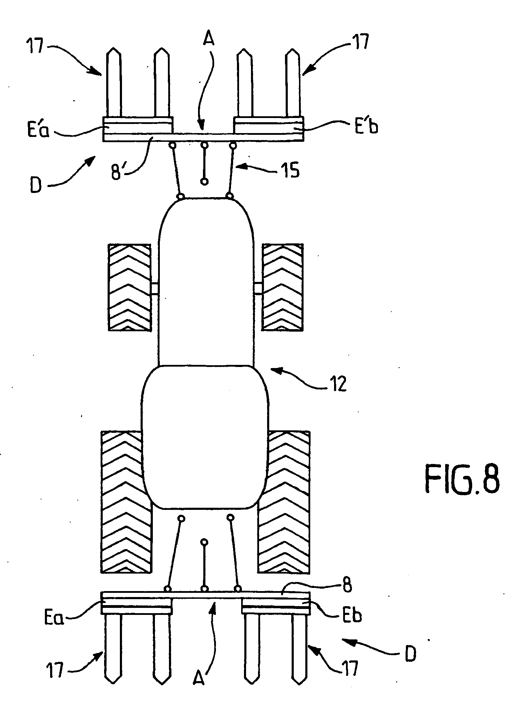

Fig.8 montre, semblablement à Fig.3, une variante d'équipement du tracteur 12 selon laquelle le bâti arrière 8 ainsi que le bâti avant 8', attelés respectivement au relevage arrière et au relevage avant, sont équipés sur leurs extensions latérales de fourches 17 pour la manutention de palettes. Deux fourches 17 orientées vers l'arrière sont attelées par trois points aux moyens d'accrochages latéraux Ea, Eb du bâti arrière 8. Deux fourches 17 orientées vers l'avant sont attelées par trois points aux moyens d'accrochage latéraux E'a et E'b du bâti avant 8'.

Le tracteur est ainsi équipé de quatre fourches pour la manutention de palettes ce qui accroît sensiblement sa productivité. La pose et la dépose de ces fourches 17 est très rapide grâce aux moyens d'accrochage à trois points normalisés.

D'autres outils que des fourches à palettes 17 peuvent être attelés aux bâtis 8, 8', par exemple des pics à balles.

Le dispositif D présente une polyvalence élevée.

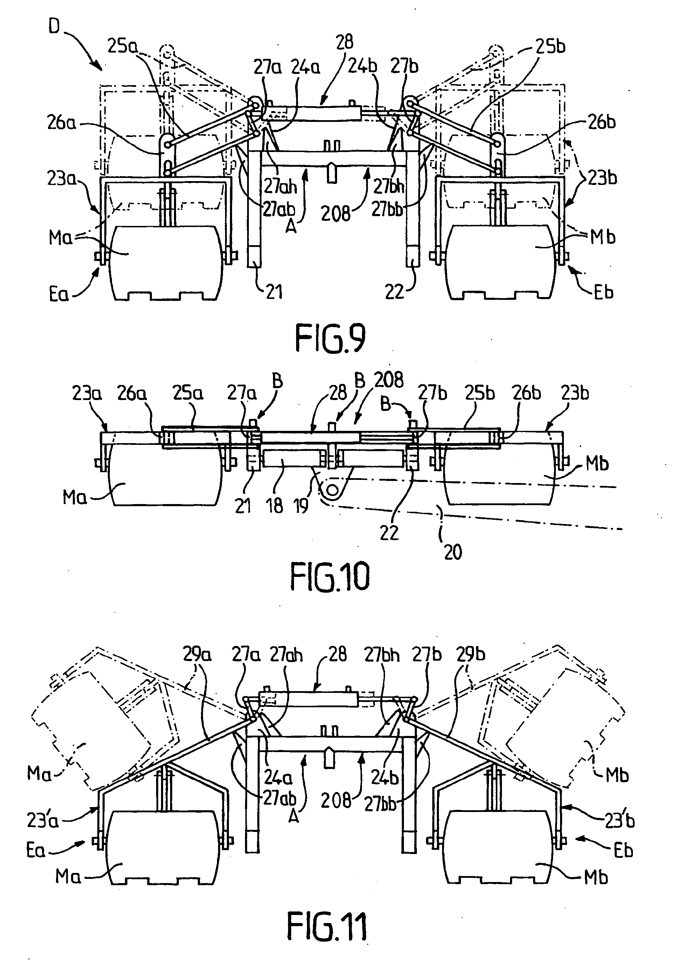

Fig.9 montre, en élévation, une variante de réalisation du dispositif D destinée à être montée à l'arrière d'un tracteur et à être combinée avec des outils semi-portés. Dans ce cas, les deux points bas du moyen d'attelage central sont utilisés pour accrocher un support 18 (Fig.10) muni vers l'arrière d'une platine 19 pour une liaison pivotante, autour d'un axe vertical, d'une flèche 20 de traction d'un outil.

Le dispositif D comporte un bâti 208 formé par un cadre en U renversé muni, du côté tourné vers le tracteur, du moyen d'attelage B au relevage trois points du tracteur et, du côté opposé, de crochets inférieurs latéraux 21, 22 pour permettre l'accrochage d'un outil.

Une extension latérale 23a, 23b est implantée de chaque côté du cadre 208. Chaque extension latérale 23a, 23b comporte trois points d'accrochage en triangle pour que la masse, ou la charge, attelée à l'extension latérale soit maintenue sans possibilité d'oscillation relativement à cette extension.

Les extensions latérales 23a, 23b peuvent être réalisées sous la forme de cadres en U renversé.

Selon la réalisation de Fig. 9, chaque extension latérale 23a, 23b est reliée à une saillie verticale latérale 24a, 24b du cadre 208 par un parallélogramme déformable 25a, 25b. Les grands côtés de ce parallélogramme sont articulés à leurs extrémités d'une part sur les saillies 24a, 24b et, d'autre part, sur des oreilles verticales 26a, 26b prévues sur une traverse supérieure à mi-largeur des cadres 23a, 23b.

L'extrémité du grand côté inférieur de chaque parallélogramme articulée sur la saillie 24a, 24b est solidaire d'une extension vers le haut 27a, 27b sensiblement à angle droit.

Au moins un vérin hydraulique 28 disposé transversalement, parallèlement au côté supérieur du cadre 208, est relié de manière articulée, respectivement par son cylindre et par l'extrémité de sa tige, aux extensions 27a, 27b à distance du point d'articulation du grand côté inférieur.

Lorsqu'un seul vérin 28 est prévu entre les deux extensions 27a, 27b, pour une action simultanée, on prévoit une butée haute 27ah, 27bh et une butée basse 27ab, 27bb solidaires du cadre 208. Ces butées permettent d'éviter qu'une masse aille au-delà des extrémités de sa trajectoire, sinon la position relative, symétrique, des masses ou charges latérales par rapport au cadre n'est pas assurée.

Cette contrainte est supprimée lorsque deux vérins 28, un par bras, sont prévus, ce qui est plus coûteux. Cependant le résultat technique est similaire.

En position basse des cadres 23a, 23b, illustrée en traits pleins sur Fig.9, les masses Ma, Mb peuvent reposer sur le sol, la tige du vérin 28 étant sortie et les parallélogrammes 25a, 25b ayant leurs grands côtés dirigés vers le bas.

En alimentant le vérin 28 en huile sous pression afin de faire rentrer la tige du vérin dans le cylindre, on provoque le rapprochement des extrémités supérieures des extensions 27a, 27b et la déformation des parallélogrammes 25a, 25b dans le sens de la montée jusqu'à une position représentée en tirets sur Fig.9. Lors de ce mouvement, les cadres 23a, 23b et les masses Ma, Mb se déplacent parallèlement à eux-mêmes.

Fig.11 montre une variante de réalisation du dispositif de Fig.9 selon laquelle chaque extension latérale 23'a, 23'b, au lieu d'être reliée par un parallélogramme déformable au cadre 208, est reliée par un bras 29a, 29b dont l'extrémité articulée sur les saillies 24a, 24b est solidaire de l'extension à angle droit 27a, 27b. On retrouve le vérin 28 articulé sur les extrémités supérieures des extensions 27a, 27b.

Avec cette disposition, lorsque les extensions latérales 23'a, 23'b passent de la position basse illustrée en traits pleins à la position haute illustrée en tirets, les masses Ma, Mb changent d'orientation et ne restent plus parallèles à elles-mêmes.

Le dispositif des Fig. 9 à 11 permet d'assurer un accrochage ou un décrochage aisé des masses Ma, Mb posées sur le sol.

Les masses Ma, Mb accrochées peuvent être soulevées à l'aide du (des) vérin(s) 28 ce qui permet d'éviter tout risque d'interférence entre la flèche 20 d'un outil attelé au tracteur lors des manoeuvres.

La vue de dessus selon Fig.10 illustre le gain de manoeuvrabilité obtenu en permettant le passage de la flèche 20 de l'outil semi-porté sous une masse latérale.

## Revendications

1. Dispositif pour faciliter la gestion du lestage d'un tracteur agricole et pour en améliorer la productivité, comprenant un moyen de support (A) prévu pour s'étendre transversalement à la direction de progression du tracteur, **caractérisé en ce que** le moyen de support (A) comporte une partie centrale avec un moyen d'attelage (B) à un relevage trois points, avant ou arrière, du tracteur, ce moyen d'attelage (B) comportant trois éléments de connexion, à savoir un élément supérieur médian (1) et deux éléments inférieurs latéraux (2, 3) et, de part et d'autre de cette partie centrale, une extension latérale (Aa, Ab ;23a,23b ;23'a,23'b) équipée d'un moyen d'accrochage (Ea, Eb ;E'a,E'b ; E"a, E"b) d'une masse, d'une charge ou d'un outil.

2. Dispositif selon la revendication 1, **caractérisé en ce que** le moyen d'accrochage (Ea, Eb ;E'a,E'b ;E"a, E"b) de chaque extension latérale est un moyen d'accrochage à trois points normalisés avec le triangle d'attelage d'un outil agricole ou d'une masse.

3. Dispositif selon la revendication 1 ou 2, **caractérisé en ce que** les moyens d'accrochage (Ea,Eb ;E'a,E'b ; E"a, E"b) des extensions latérales comportent des points d'accrochage inférieurs (5a,6a ;5b,6b) munis de verrous rabattables (7) propres à assurer le maintien des masses ou des outils attelés à ces points d'accrochage.

4. Dispositif selon l'une quelconque des revendications précédentes, **caractérisé en ce que** le moyen de support (A) comprend une poutre transversale (8,8' ;108 ;108') solidaire de bras verticaux (9a,10a ;9b,10b) s'étendant vers le bas et espacés suivant la direction longitudinale de la poutre, les moyens d'accrochage des extensions latérales à trois points comprenant deux crochets (5a,6a ;5b,6b) prévus en partie basse de deux bras et un crochet supérieur (4a,4b) solidaire de la poutre.

5. Dispositif selon la revendication 4, **caractérisé en ce que** l'écartement entre les bras intérieurs (10a,10b) correspond à l'écartement normalisé des points d'accrochage inférieurs d'un outil et **en ce que** les points d'accrochage inférieurs (2, 3) au relevage du tracteur sont fixés à l'extrémité inférieure des bras (10a, 10b) du côté tourné vers le tracteur.

6. Dispositif selon l'une quelconque des revendications précédentes pour être accroché à un relevage avant d'un tracteur, **caractérisé en ce qu'**il comporte des moyens d'accrochage tournés vers l'avant (E'a, E'b) et vers l'arrière (E"a, E"b) au niveau des extensions latérales afin de permettre d'accrocher deux masses (M'a,M"a ;M'b,M"b) de chaque côté, l'une en avant et l'autre en arrière du moyen de support (A).

7. Dispositif selon la revendication 6, **caractérisé en ce que** le moyen de support (A) est formé par un bâti (108') comportant deux extensions latérales déportées vers le tracteur (108'a, 108'b) de manière à réduire le déport des masses (M'a, M'b) attelées sur ces extensions latérales.

8. Dispositif selon l'une des revendications 1 à 3, **caractérisé en ce qu'**il comporte des extensions latérales (23a, 23b ; 23'a, 23'b) supportées par des moyens de levage (25a, 25b ;29a, 29b ;28) reliés à une partie centrale (208) du moyen de support de manière à soulever les masses afin de permettre le passage, au-dessous de ces masses, d'une flèche d'attelage (20) d'un outil semi-porté.

9. Dispositif selon la revendication 8, **caractérisé en ce que** les moyens de levage comprennent au moins un vérin (28) disposé transversalement pour commander la montée ou la descente des extensions latérales (23a, 23b ; 23'a; 23'b) reliées à un cadre central (208) par au moins un bras articulé (25a, 25b ;29a , 29b).

10. Dispositif selon la revendication 9, **caractérisé en ce que** les moyens de levage comprennent un seul vérin (28) disposé transversalement pour commander la montée ou la descente des extensions latérales (23a, 23b ; 23'a, 23'b) et que des butées hautes (27ah, 27bh) et basses (27ab, 27bb) sont prévues pour éviter qu'une masse aille au-delà des extrémités de sa trajectoire.

11. Dispositif selon la revendication 9, **caractérisé en ce que** les moyens de levage comprennent deux vérins , un par bras, disposés transversalement.

12. Dispositif selon l'une des revendications 9 à 11, **caractérisé en ce que** chaque extension latérale (23a, 23b) est reliée à la partie centrale (208) par un parallélogramme déformable (25a, 25b).

## Claims

1. A device for making it easier to manage the ballasting of an agricultural tractor and for improving its productivity, comprising a support means (A) designed to extend transversely to the direction of travel of the tractor, **characterized in that** the support means (A) comprises a central portion with a means (B) for coupling to a three-point hitch, front or rear, of the tractor, this coupling means (B) comprising three connection elements, namely a top middle element (1) and two bottom side elements (2, 3) and, on either side of this central portion, a side extension (Aa, Ab; 23a, 23b; 23'a, 23'b) fitted with a means (Ea, Eb; E'a, E'b; E"a, E"b) for coupling a weight, a load or an implement.

2. The device as claimed in claim 1, **characterized in that** the coupling means (Ea, Eb; E'a, E'b; E"a, E"b) of each side extension is a standard three-point means for coupling with the coupling triangle of an agricultural implement or a weight.

3. The device as claimed in claim 1 or 2, **characterized in that** the coupling means (Ea, Eb; E'a, E'b; E"a, E"b) of the side extensions comprise lower coupling points (5a, 6a; 5b, 6b) furnished with foldable latches (7) suitable for holding the weights or the implements hitched to these coupling points.

4. The device as claimed in any one of the preceding claims, **characterized in that** the support means (A) comprises a cross beam (8, 8'; 108; 108') fixedly attached to vertical arms (9a, 10a; 9b, 10b) extending downward and spaced apart in the longitudinal direction of the beam, the coupling means of the three-point side extensions comprising two hooks (5a, 6a; 5b, 6b) provided at the bottom with two arms and a top hook (4a, 4b) fixedly attached to the beam.

5. The device as claimed in claim 4, **characterized in that** the spacing between the inner arms (10a, 10b) corresponds to the standard spacing of the lower coupling points of an implement and **in that** the lower points (2, 3) for coupling to the tractor hitch are attached at the bottom end of the arms (10a, 10b) on the side turned toward the tractor.

6. The device as claimed in any one of the preceding claims for being coupled to a front hitch of a tractor, **characterized in that** it comprises coupling means turned toward the front (E'a, E'b) and toward the rear (E"a, E"b) on the side extensions in order to make it possible to couple two weights (M'a, M"a; M'b, M"b) on either side, one in front of and the other behind the support means (A).

7. The device as claimed in claim 6, **characterized in that** the support means (A) is formed by a frame (108') comprising two side extensions offset toward the tractor (108'a, 108'b) so as to reduce the overhang of the weights (M'a, M'b) hitched to these side extensions.

8. The device as claimed in one of claims 1 to 3, **characterized in that** it comprises side extensions (23a, 23b; 23'a, 23'b) supported by lifting means (25a, 25b; 29a, 29b; 28) connected to a central portion (208) of the support means so as to lift the weights in order to allow a drawbar (20) of a semi-mounted implement to pass beneath these weights.

9. The device as claimed in claim 8, **characterized in that** the lifting means comprise at least one cylinder (28) placed transversely in order to control the raising or lowering of the side extensions (23a, 23b; 23'a, 23'b) connected to a central frame (208) by at least one articulated arm (25a, 25b; 29a, 29b).

10. The device as claimed in claim 9, **characterized in that** the lifting means comprise a single cylinder (28) placed transversely in order to control the raising or lowering of the side extensions (23a, 23b; 23'a, 23'b) and that top stops (27ah, 27bh) and bottom stops (27ab, 27bb) are provided in order to prevent a weight from going beyond the ends of its trajectory.

11. The device as claimed in claim 9, **characterized in that** the lifting means comprise two cylinders, one per arm, placed transversely.

12. The device as claimed in one of claims 9 to 11, **characterized in that** each side extension (23a, 23b) is connected to the central portion (208) by a deformable parallelogram (25a, 25b).

## Patentansprüche

1. Vorrichtung zur Erleichterung der Gewichtskontrolle einer landwirtschaftlichen Zugmaschine und zur Verbesserung der Produktivität desselben, mit einer sich quer zur Bewegungsrichtung der Zugmaschine erstreckenden Stützeinrichtung (A), **dadurch gekennzeichnet, dass** die Stützeinrichtung (A) einen Mittelbereich mit einer Einrichtung (B) zum Ankuppeln an eine vordere oder hintere. Dreipunkt-Hebevorrichtung der Zugmaschine aufweist, wobei die Ankuppeleinrichtung (B) drei Verbindungselemente, nämlich ein oberes Mittelelement (1) und zwei untere Seitenelemente (2, 3), und zu beiden Seiten des Mittelbereichs eine seitliche Verlängerung (Aa; Ab; 23a, 23b; 23'a, 23'b) aufweist, welche mit einer Einrichtung (Ea, Eb; E'a, E'b; E"a, E"b) zum Einhaken einer Masse, einer Last oder eines Werkzeugs versehen ist.

2. Vorrichtung nach Anspruch 1, **dadurch gekennzeichnet, dass** die Einhakeinrichtung (Ea, Eb; E'a, E'b; E"a, E"b) jeder seitlichen Verlängerung eine für das Ankupplungsdreieck eines landwirtschaftlichen Werkzeugs oder einer Masse genormte Dreipunkt-Einhakeinrichtung ist.

3. Vorrichtung nach Anspruch 1 oder 2, **dadurch gekennzeichnet, dass** die Einhakeinrichtung (Ea, Eb; E'a, E'b; E"a, E"b) der seitlichen Verlängerungen untere Einhakpunkte (5a, 6a; 5b, 6b) aufweist, welche mit klappbaren Riegeln (7) versehen sind, welche geeignet sind, das Halten von an diesen Einhakpunkten angekuppelte Massen oder Werkzeugen zu gewährleisten.

4. Vorrichtung nach einem der vorhergehenden Ansprüche, **dadurch gekennzeichnet, dass** die Stützeinrichtung (A) einen Querträger (8, 8'; 108, 108') aufweist, der fest mit vertikalen Armen (9a, 10a; 9b, 10b) verbunden ist, welche sich nach unten erstrecken und in Längsrichtung des Trägers voneinander beabstandet sind, wobei die Dreipunkt-Einhakeinrichtungen der seitlichen Verlängerungen zwei Haken (5a, 6a; 5b, 6b), welche im unteren Teil zweier Arme vorgesehen sind, und einen oberen Haken (4a, 4b) aufweisen, der fest mit dem Träger verbunden ist.

5. Vorrichtung nach Anspruch 4, **dadurch gekennzeichnet, dass** der Abstand zwischen den inneren Armen (10a, 10b) dem genormten Abstand der unteren Einhakpunkte eines Werkzeugs entspricht, und dass die unteren Einhakpunkte (2, 3) an der Hebeeinrichtung der Zugmaschine am unteren Ende der Arme (10a, 10b) auf der der Zugmaschine zugewandten Seite befestigt sind.

6. Vorrichtung nach einem der vorhergehenden Ansprüche zum Einhaken an eine vordere Hebeeinrichtung einer Zugmaschine, **dadurch gekennzeichnet, dass** sie an den seitlichen Verlängerungen nach vorn (E'a, E'b) und nach hinten (E"a, E"b) gerichtete Einhakeinrichtungen aufweist, um das Einhaken zweier Massen (M'a, M"a; M'b, M"b) auf jeder Seite, eine vor und eine hinter der Stützeinrichtung (A), zu ermöglichen.

7. Vorrichtung nach Anspruch 6, **dadurch gekennzeichnet, dass** die Stützeinrichtung (A) durch ein Gestell (108') gebildet ist, welches zwei seitliche Verlängerungen (108'a, 108'b) aufweist, die derart in Richtung der Zugmaschine versetzt sind, dass der Versatz der an diese seitlichen Verlängerungen angehängten Massen (M'a, M'b) verringert ist.

8. Vorrichtung nach einem der Ansprüche 1 bis 3, **dadurch gekennzeichnet, dass** sie seitliche Verlängerungen (23a, 23b; 23'a, 23'b) aufweist, welche von Hubeinrichtungen (25a, 25b; 29a, 29b; 28) gestützt sind, die mit einem Mittelbereich (208) der Stützeinrichtung zum Anheben der Massen verbunden sind, um das Hindurchführen der Anhängedeichsel (20) eines Aufsattelwerkzeugs zu ermöglichen.

9. Vorrichtung nach Anspruch 8, **dadurch gekennzeichnet, dass** die Hubeinrichtungen mindestens einen quer angeordneten Zylinder (28) zum Steuern des Anhebens oder des Absenkens der seitlichen Verlängerungen (23a, 23b; 23'a, 23'b) aufweisen, welche mit einem mittleren Rahmen (208) durch mindestens einen Gelenkarm (25a, 25b; 29a, 29b) verbunden sind.

10. Vorrichtung nach Anspruch 9, **dadurch gekennzeichnet, dass** die Hubeinrichtungen einen einzelnen quer angeordneten Zylinder (28) zum Steuern des Anhebens oder des Absenkens der seitlichen Verlängerungen (23a, 23b; 23'a, 23'b) aufweisen, und dass obere (27ah, 27bh) und untere Anschläge (27ab, 27bb) vorgesehen sind, um zu verhindern, dass sich eine Masse über ihre Bahn hinaus bewegt.

11. Vorrichtung nach Anspruch 9, **dadurch gekennzeichnet, dass** die Hubeinrichtungen zwei quer angeordnete Zylinder, jeweils einen pro Arm, aufweisen.

12. Vorrichtung nach einem der Ansprüche 9 bis 11, **dadurch gekennzeichnet, dass** jede seitliche Verlängerung (23a, 23b) mit dem Mittelbereich (208) durch ein verformbares Parallelogramm (25a, 25b) verbunden ist.
